# EUROPÄISCHE PATENTSCHRIFT

(11) **EP 4 126 412 B1**
(45) Veröffentlichungstag und Bekanntmachung des Hinweises auf die Patenterteilung: **14.10.2026**
(21) Anmeldenummer: 20719352.5
(22) Anmeldetag: 03.04.2020
(51) Int. Cl.: B21D 51/26, B21D 51/32, B65G 47/84, B67C 7/00

(54) **VORRICHTUNG ZUR VERARBEITUNG VON BEHÄLTERN**
DEVICE FOR PROCESSING CONTAINERS
DISPOSITIF DE TRAITEMENT DE CONTENANTS

(43) Veröffentlichungstag der Anmeldung: 08.02.2023
(73) Patentinhaber: Ferrum Packaging AG, 5503 Schafisheim (CH)
(72) Erfinder: DÜNKI, Jürg, 8953 Dietikon (CH)
(74) Vertreter: IPS Irsch AG
(86) Internationale Anmeldenummer: PCT/EP2020/059509
(87) Internationale Veröffentlichungsnummer: WO 2021/197611

(56) Entgegenhaltungen:
- DE-A1- 102014 103 632
- DE-U1- 202010 018 582
- FR-A1- 2 937 619
- US-A- 2 645 399

## Beschreibung

Die Erfindung betrifft eine Vorrichtung zur Verarbeitung von Behältern. Die Erfindung betrifft weiter eine Auslaufvorrichtung für eine erfindungsgemässe Vorrichtung, sowie ein Verfahren zum Anpassen der erfindungsgemässen Vorrichtung.

Bei der Abfüllung von Getränkedosen oder Lebensmitteldosen durchlaufen die Dosen nach der Befüllung mit dem Getränk oder dem Lebensmittel einen Dosenverschliesser, wobei die befüllten Dosenkörper über einen Zuführweg einlaufen und über einen weiteren Zuführweg Dosendeckel einlaufen. Der Dosenverschliesser weist üblicherweise mehrere karussellförmig angeordnete, gleichartige Stationen auf, in denen jeweils eine Dose mit einem Dosendeckel verschlossen wird. Die Dosendeckel werden dabei auf die Dosenkörper geführt und mit einer Halteplatte eines Falzkopfes auf dem Dosenkörper gehalten. Dieses Halten dient auch der Fixierung der Dosen gegen ein Ausbrechen aus der von den Dosen in dem Dosenverschliesser durchlaufenen Kreisbahn aufgrund der Zentrifugalkraft. In dem Dosenverschliesser werden dabei die Dosenkörper mit dem Dosendeckel randseitig über eine Falzrolle gefalzt und somit verschlossen. In der Regel wird die Dose mit dem Dosendeckel dabei mittels des Falzkopfes zusätzlich um die eigene Symmetrieachse rotiert. Zur Rotation sind die Falzrollen und Falzköpfe an einer jeweiligen Falzwelle angeordnet.

Ein gattungsgemässer Dosenverschliesser ist in der DE 749636 und der DE4234115 A1 beschrieben. Der Dosenverschliesser umfasst eine Einspannvorrichtung zur Aufnahme einer zu verschliessenden Dose. Im Betriebszustand ist die zu verschliessende Dose in die Einspannvorrichtung eingebracht und durch diese in axialer und radialer Richtung gesichert. Ebenso ist ein Dosendeckel über der Dosenöffnung der zu verschliessenden Dose zentriert eingebracht. Die Dose weist im Bereich der Dosenöffnung einen umlaufenden Dosenflansch und der Dosendeckel einen umlaufenden Dosendeckelflansch auf. Zum Verschliessen der Dosenöffnung durch den Dosendeckel umfasst der Dosenverschliesser zusätzlich zwei um jeweils eine Achse drehbar gelagerte Falzrollen, die den Dosenflansch und den Dosendeckelflansch mittels einer im Wesentlichen radial wirkenden Kraft miteinander verpressen, wobei die Verpressung durch ein kontinuierliches Abrollen in Umfangsrichtung entlang des Umfanges der Dosenöffnung erfolgt.

Ein weiterer Dosenverschliesser ist aus der GB 2098899 A bekannt. Der Dosenverschliesser umfasst eine Einspannvorrichtung zur Aufnahme der zu verschliessenden Dose und eine Falzrolle. Im Betriebszustand ist die zu verschliessende Dose in die Einspannvorrichtung eingebracht und durch diese in axialer und radialer Richtung gesichert. Ebenso ist ein Dosendeckel über der Dosenöffnung der zu verschliessenden Dose zentriert eingebracht. Die Dose weist im Bereich der Dosenöffnung des Dosenkörpers einen umlaufenden Dosenflansch und der Dosendeckel einen umlaufenden Dosendeckelflansch auf.

Der Übergang beziehungsweise das Abführen der Dosen aus den karussellförmig angeordneten Stationen erfolgt in der Regel über eine Auslaufvorrichtung mit einem sogenannten Auslaufstern und einer Auskämmkurve, wobei die Dose mittels der Auskämmkurve aus der entsprechenden Stationen aufgenommen wird und durch den Auslaufstern abgeführt wird, um zu einer anderen Bearbeitungsstation geführt zu werden.

Verschiedene Behälterformen können mit einem einzigen Verschliesser verschlossen werden, beziehungsweise mit einem einzigen Befüller befüllt werden. Um die Auslaufvorrichtung auf die verschiedenen Behälterformate anzupassen, muss sowohl der Auslaufstern als auch die Auskämmkurve ausgetauscht werden.

Der Stand der Technik FR 2 937 619 A1, auf den der Oberbegriff des Patentanspruchs 1 basiert, offenbart ein Führungssystem für eine rotierende Füllmaschine für Behälter mit einem Sternrad zur Bewegung der Behälter. Dabei ist das Führungssystem in radialer Richtung relativ zur Rotationsachse des Sternrades beweglich.

Ein wesentlicher Nachteil der aus dem Stand der Technik bekannten Vorrichtungen liegt also darin, dass der Wechsel der Auskämmkurve und des Auslaufsterns zeitaufwendig und kompliziert ist, was zu langen Stillstandzeiten führen kann.

Aufgabe der Erfindung ist es daher eine Vorrichtung zur Verarbeitung von Behältern bereitzustellen, welche die aus dem Stand der Technik bekannten nachteiligen Wirkungen vermeiden. Insbesondere soll eine Vorrichtung zur Verarbeitung von Behältern bereitgestellt werden, durch welche Stillstandzeiten durch einen Werkzeugwechsel deutlich reduziert werden.

Die Aufgabe wird durch eine erfindungsgemässe Vorrichtung zur Verarbeitung von Behältern, sowie eine Auslaufvorrichtung für eine erfindungsgemässe Vorrichtung und durch das erfindungsgemässe Verfahren zum Anpassen der erfindungsgemässen Vorrichtung gelöst.

Erfindungsgemäss wird eine Vorrichtung zur Verarbeitung von Behältern umfassend eine Verarbeitungsstation mit einem Behälterförderer zum Bewegen des Behälters durch die Verarbeitungsstation und eine Auslaufvorrichtung zum Abführen des Behälters aus der Verarbeitungsstation vorgeschlagen. Hierbei umfasst die Auslaufvorrichtung einen Auslaufstern mit einem Mitnehmer zum Transportieren der Behälter; ein um den Auslaufstern angeordnetes Auskämmteil, welches Auskämmteil eine Auskämmkurve zum Führen der Behälter definiert; einen an einem ersten Ende des Auskämmteils angeordneten Behältereingang zur Aufnahme der Behälter aus der Verarbeitungsstation; sowie einen an einem zweiten Ende des Auskämmteils angeordneten Behälterausgang zur Abfuhr der Behälter aus der Auslaufvorrichtung. Das Auskämmteil umfasst dabei an dem ersten Ende eine Auskämmkante, welche Auskämmkante derart in einem Bereich des Behälterförderers angeordnet ist, dass der Behälter im Betriebszustand durch die Auskämmkante aus der Verarbeitungsstation in den Behältereingang aufnehmbar ist. Der Auslaufstern ist derart um eine Achse rotierbar angeordnet, dass der Behälter durch den Mitnehmer des Auslaufsterns auf einer durch die Auskämmkurve und den Auslaufstern begrenzten Führungsbahn vom Behältereingang zum Behälterausgang transportierbar ist.

Das Auskämmteil ist in einer zu der Achse orthogonal verlaufenden radialen Richtung derart verschiebbar angeordnet, dass die Auskämmkante relativ zum Behälterförderer bewegbar ist, sodass die Auslaufvorrichtung verschiedene Behälterformate aufnehmen kann. So kann die Auskämmkante also weiter zu dem Bereich des Behälterförderers oder von dem Bereich des Behälterförderers wegbewegt werden. Dadurch wird es ermöglicht, dass verschiedene Arten von Behältern mit verschiedenen Grössen, insbesondere verschiedenen Radien (also verschiedene Behälterformate) aufgenommen werden können, ohne dass das Auskämmteil ausgetauscht werden muss. Wird die Auskämmkante weiter zu dem / in den Bereich des Behälterförderers bewegt, können dadurch grössere Behälter (von der Auslaufvorrichtung) aufgenommen werden. Wird die Auskämmkante von dem Bereich des Behälterförderers wegbewegt, können dadurch kleinere Behälter (von der Auslaufvorrichtung) aufgenommen werden.

Insbesondere ist die Auskämmkurve des Auskämmteils also eine kurvenförmige Aussparung im Auskämmteil. Die Aussparung kann dabei eine beliebige geeignete Form besitzen, wie zum Bespiel die Form eines Halbkreises.

Der Betriebszustand wird als der Zustand angesehen, in welchem Behälter mit dem Behälterförderer durch die Verarbeitungsstation bewegt werden.

Der Auslaufstern ist mit dem Auskämmteil in der radialen Richtung verschiebbar angeordnet. Insbesondere können der Auslaufstern und das Auskämmteil dabei synchron verschiebbar sein, wofür der Auslaufstern und das Auskämmteil über ein Verbindungsteil gekoppelt sein können.

Der Auslaufstern umfasst bevorzugt eine Vielzahl von Mitnehmern zum Transportieren einer Vielzahl von Behältern. Die Mitnehmer sind dabei bevorzugt in gleichmässigen Abständen um den Auslaufstern verteilt.

Die Auslaufvorrichtung kann eine an dem Behälterausgang angeordnete Abführschiene umfassen. Durch diese Abführschiene wird ein Kippen der Behälter nach Verlassen der begrenzten Führungsbahn (also hinter der Auskämmkurve) verhindert, da die Abführschiene als eine Leitplanke für die Behälter fungiert. Hierbei kann die Abführschiene insbesondere eine erste an dem zweiten Ende des Auskämmteils befestigte Abführschiene umfassen. Ist die erste Abführschiene an dem zweiten Ende der Kurve befestigt, wird die erste Abführschiene beim Verschieben des Auskämmteils auch verschoben. So wird auch die Abführschiene an eine neue Ausrichtung des Auskämmteils bei einem Formatwechsel (Wechseln der Behältergrösse / des Behälterradius) angepasst.

Die Abführschiene kann ausserdem eine der ersten Schiene gegenüberliegend angeordnete zweite Abführschiene umfassen, welche zweite Abführschiene derart in die radiale Richtung verschiebbar angeordnet ist, dass die zweite Abführschiene relativ zum Behälterförderer bewegbar ist. Durch die zweite Abführschiene in Kombination mit der ersten Abführschiene wird eine Abführbahn (zwischen den Abführschienen) definiert. Da sowohl die erste Abführschiene als auch die zweite Abführschiene bewegbar sind, kann die Abführbahn an die neue Ausrichtung des Auskämmteils bei dem Formatwechsel angepasst werden. Insbesondere können die erste und zweite Abführschiene gekoppelt bewegbar sein, sodass sie synchron bewegt werden. Alternativ kann die zweite Abführschiene, unabhängig von der ersten Abführschiene, durch eine separate Verschiebungseinheit bewegbar sein. Dies ermöglicht, dass die Abführbahn bei einem Formatwechsel nicht nur mit dem Auskämmteil neu ausgerichtet wird, sondern auch selbst an das neue Format angepasst wird, indem eine Breite der Abführbahn variiert wird.

Ausserdem kann die Auslaufvorrichtung ein an dem Behälterausgang angeordnetes Abführband zum Wegführen der Behälter von der Auslaufvorrichtung umfassen. Das Abführband ist dabei bevorzugt an (unter) der Abführbahn angeordnet.

In der Praxis kann die Auslaufvorrichtung einen Antrieb zum Rotieren des Auslaufsterns umfassen, wobei der Auslaufstern über eine Sternwelle mit dem Antrieb verbunden ist. Um die Bewegung des Auslaufsterns zu erleichtern, kann die Sternwelle über eine Parallelkurbelkupplung mit dem Antrieb verbunden sein, sodass der Auslaufstern relativ zum Antrieb in der radialen Richtung bewegbar ist, ohne dass der Antrieb mitbewegt werden muss. Die Parallelkurbelkupplung kann insbesondere als eine Schmidt-Kupplung ausgestaltet sein. Die Parallelkurbelkupplung / Schmidt-Kupplung verbindet dabei eine Antriebswelle des Antriebs mit der Sternwelle. Sowohl die Parallelkurbelkupplung als auch die Schmidt-Kupplung sind bereits im Stand der Technik bekannt.

Die Parallelkurbelkupplung ermöglicht eine grosse Radialverlagerung (Verlagerung in der radialen Richtung) der Sternwelle und der Antriebswelle. Sie umfasst insbesondere zwei Kupplungsscheiben, die jeweils mit zwei parallelen Lenkern mit einer Mittelscheibe verbunden sind. Die Parallelkurbelkupplung ermöglicht eine winkeltreue Übertragung von Drehmomenten. Durch die Schmidt-Kupplung können die Sternwelle und die Antriebswelle radial verstellt werden und trotzdem weiter angetrieben werden. Die Schmidt-Kupplung umfasst in der Regel drei parallel angeordnete Scheiben, welche über mehrere Lenker verbunden sind. Bei Drehung einer Scheibe wird die Rotationsbewegung durch drei oder mehrere Lenker während des Umlaufes durch Aufbau von abwechselnden Zug- und Druckkräften absolut gleichförmig und damit winkeltreu auf die nächste Scheibe übertragen.

In einer besonders bevorzugten Ausführungsform der Erfindung ist die Verarbeitungsstation als ein Verschliesser, insbesondere als ein Dosenverschliesser ausgestaltet. Dabei ist der Behälterförderer bevorzugt als ein Rundläufer ausgestaltet und die Vorrichtung in Form einer Königswelle angeordnet.

Erfindungsgemäss wird weiter eine Auslaufvorrichtung für die Behälterverarbeitungsvorrichtung, umfassend den Auslaufstern mit dem Mitnehmer zum Transportieren der Behälter; das um den Auslaufstern angeordnete Auskämmteil, welches Auskämmteil die Auskämmkurve zum Führen der Behälter definiert; den an dem ersten Ende des Auskämmteils angeordneten Behältereingang zur Aufnahme der Behälter; sowie den an dem zweiten Ende des Auskämmteils angeordneten Behälterausgang zur Abfuhr der Behälter aus der Auslaufvorrichtung, vorgeschlagen. Das Auskämmteil umfasst an dem ersten Ende die Auskämmkante und der Auslaufstern ist derart um die Achse rotierbar angeordnet, dass der Behälter durch den Mitnehmer des Auslaufsterns auf der durch die Auskämmkurve und den Auslaufstern begrenzten Führungsbahn vom Behältereingang zum Behälterausgang transportierbar ist. Das Auskämmteil ist in der zu der Achse orthogonal verlaufenden radialen Richtung verschiebbar angeordnet, sodass die Auslaufvorrichtung verschiedene Behälterformate aufnehmen kann. Zudem ist der Auslaufstern mit dem Auskämmteil in der radialen Richtung verschiebbar angeordnet.

Erfindungsgemäss wird weiter ein Verfahren zum Anpassen der erfindungsgemässen Vorrichtung an das Behälterformat des Behälters vorgeschlagen. Das Verfahren dient also dazu die Vorrichtung an den Formatwechsel anzupassen. Dabei wird die erfindungsgemässe Vorrichtung bereitgestellt und das Auskämmteil in der zu der Achse orthogonal verlaufenden radialen Richtung verschoben, sodass die Auskämmkante relativ zum Behälterförderer bewegt wird. Insbesondere kann für den Formatwechsel auch noch der Auslaufstern ausgetauscht werden.

Die erfindungsgemässe Vorrichtung ist wie vorangehend erwähnt bevorzugt als ein Dosenverschliesser ausgestaltet. Dabei kann der Behälter eine Dose mit einem Dosendeckel sein, welche durch den Dosenverschliesser miteinander verfalzt werden. Der Dosenverschliesser umfasst zum Verschliessen der Dose bevorzugt eine oder mehrere Falzrollen (wie aus dem Stand der Technik bekannt) und einen Falzkopf. Im Betriebszustand werden die Falzrollen mit ihrem jeweiligen Falzprofil in Kontakt mit einem Dosendeckelflansch des Dosendeckels und einem Dosenflansch der Dose gebracht. Durch Rotation der Dose wird dann die Falzrolle in Umfangsrichtung der Dose rotiert, wobei der Dosenflansch mit dem Dosendeckelflansch verfalzt wird. Zur Rotation der Dose, wird die Dose bevorzugt zwischen dem Falzkopf und einer Stütze eingespannt, wobei der Falzkopf mit der Falzwelle um die Falzachse rotiert wird.

Im Rahmen der Erfindung kann unter der Dose ein rotationssymmetrischer Behälter verstanden werden, welcher mittels des Dosenverschliessers und der zugehörigen Falzrolle verschlossen wird. Eine Dose kann vorzugsweise ein Metall, insbesondere Stahl oder Aluminium umfassen.

Prinzipiell kann der erfindungsgemässe Verschliesser analog zu den bereits aus dem Stand der Technik bekannten Dosenverschliessern sein, sich jedoch in der Auslaufvorrichtung unterscheiden. Hierbei ergibt sich der Vorteil dass bekannte Dosenverschliesser / Verschliesser mit der erfindungsgemässen Auslaufvorrichtung modifiziert werden können, um so die Nachteile des Standes der Technik zu vermeiden.

In der Praxis umfasst der Dosenverschliesser wie im Stand der Technik eine Einspannvorrichtung aus Falzkopf und Stütze, mit welcher die Dose zum Verschliessen in axialer und radialer Richtung fixiert wird und in Umfangsrichtung rotiert werden kann.

Prinzipiell kann der Verschliesser bevorzugt mindestens zwei Falzrollen mit vorzugsweise unterschiedlichen Falzprofilen umfassen, sodass Dosen nach dem Doppelfalzprinzip verschlossen werden können, bei welchem die Dosen in der Regel in zwei Stufen verschlossen werden. Je eine Falzrolle ist für eine Stufe zuständig. Die erste Falzrolle fertigt einen Vorfalz an, während die zweite Falzrolle die Dose komplett verschliesst.

Im Folgenden werden die Erfindung und der Stand der Technik anhand von Ausführungsbeispielen unter Bezugnahme auf die Zeichnungen näher erläutert.
- Fig. 1: eine Draufsicht einer erfindungsgemässen Vorrichtung;
- Fig. 2: eine Seitenansicht eines Dosenverschliessers;
- Fig. 3: eine Draufsicht einer erfindungsgemässen Auslaufvorrichtung;
- Fig. 4: eine perspektivische Darstellung der erfindungsgemässen Auslaufvorrichtung;
- Fig. 5: eine weitere Darstellung der erfindungsgemässen Auslaufvorrichtung.

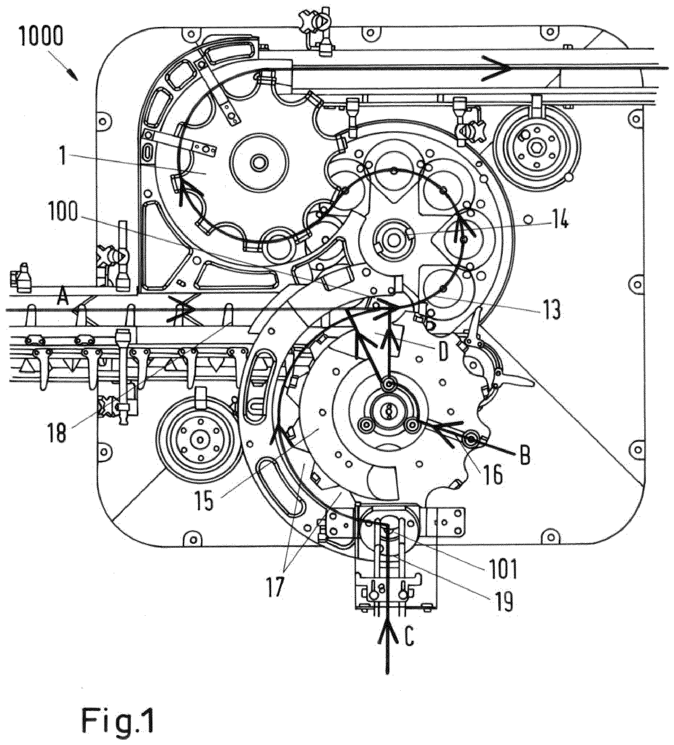

Fig. 1 zeigt eine Draufsicht einer erfindungsgemässen Vorrichtung 1000 ausgestaltet als eine Verschliesseranordnung 1000.

Die Verschliesseranordnung 1000 zum Verschliessen eines Behälter 100 umfasst eine Deckelzufuhreinrichtung 19 zur Zufuhr eines Deckels 101 zu dem Behälter 100, eine Begasungsvorrichtung 1 zur Zuführung von Gas zum Behälter 100 und eine Verarbeitungsstation (hier einen Verschliesser 14) zum Verschliessen des Behälters 100 mit dem Deckel 101.

Im dargestellten Ausführungsbeispiel ist der Verschliesser 14 bevorzugt als ein Dosenverschliesser 14 ausgestaltet. Dabei ist der Behälter 100 eine Dose 100, welche in dem Dosenverschliesser 14 verfalzt wird.

Im Betriebszustand wird der Deckel 101 entlang des Pfeiles C durch die Deckelzufuhreinrichtung 19 in die Verschliesseranordnung 1000 eingebracht. Hierbei werden die Deckel 101 auf einem Begasungsrotor 15 angeordnet. Durch Rotation des Begasungsrotors 15 werden die Deckel 101 weiter transportiert. Dann werden die Behälter 100 durch die Behälterzuführung 18 in die Behälteraufnahmen 17 des Begasungsrotors 15 eingebracht. Dort wird der Behälter 100 im Bereich D mit einem Gas wie Kohlenstoffdioxid oder Stickstoff begast und mit dem Deckel 101 vereint.

Die Begasung erfolgt entlang des Pfeiles B mit der Gaszufuhr 16. Nach der Begasung wird der Behälter 100 mit dem Deckel 101 durch den Behälterförderer 13 durch den Verschliesser 14 transportiert und dort verschlossen. Anschliessend wird der Behälter 100 durch eine Auslaufvorrichtung 1 aus dem Verschliesser 14 abgeführt.

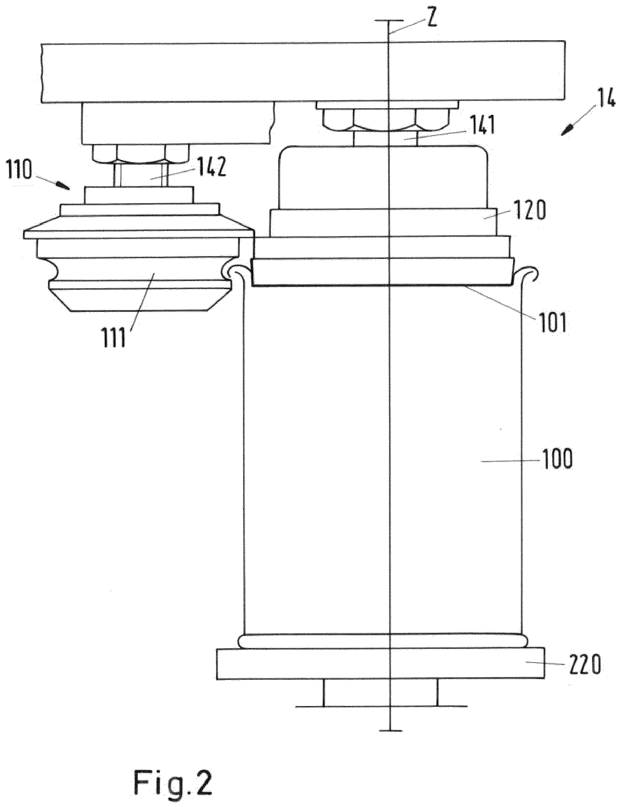

Fig. 2 zeigt eine Seitenansicht eines Dosenverschliessers 14 mit einer zu verschliessenden Dose 100 und einem Dosendeckel 101.

Gemäss Fig. 2 umfasst der Dosenverschliesser 14 eine Einspannvorrichtung, welche eine Dosenstütze 220 und einen Falzkopf 120 umfasst, und eine um die Falzwelle 142 drehbar gelagerte Falzrolle 110 mit einem Falzrollenprofil 111. Über der Öffnung der Dose 100 ist der Dosendeckel 101 zentriert angeordnet. Die Dose 100 weist im Bereich der Dosenöffnung einen umlaufenden Dosenflansch und der Dosendeckel 101 einen umlaufenden Dosendeckelflansch auf.

Während des Verschliessvorgangs wird die Falzrolle 110 über das Falzrollenprofil 111 in Kontakt mit dem Dosenflansch und dem Dosendeckelflansch gebracht. Hierbei werden der Dosenflansch und der Dosendeckelflansch mittels einer im Wesentlichen radial wirkenden Kraft über die Falzrolle 110 miteinander verpresst. Die Verpressung erfolgt dabei durch ein kontinuierliches Abrollen der Falzrolle 110 in Umfangsrichtung entlang des Umfanges der Dosenöffnung. Durch Falzen der Dose 100 mit dem Dosendeckel 101 wir vorzugsweise ein Doppelfalz erzeugt.

Zum Verfalzen wird die Dose 100 dabei durch die Einspannvorrichtung rotiert, indem der Falzkopf 120 mit der Falzwelle 141 um die Falzachse Z rotiert wird.

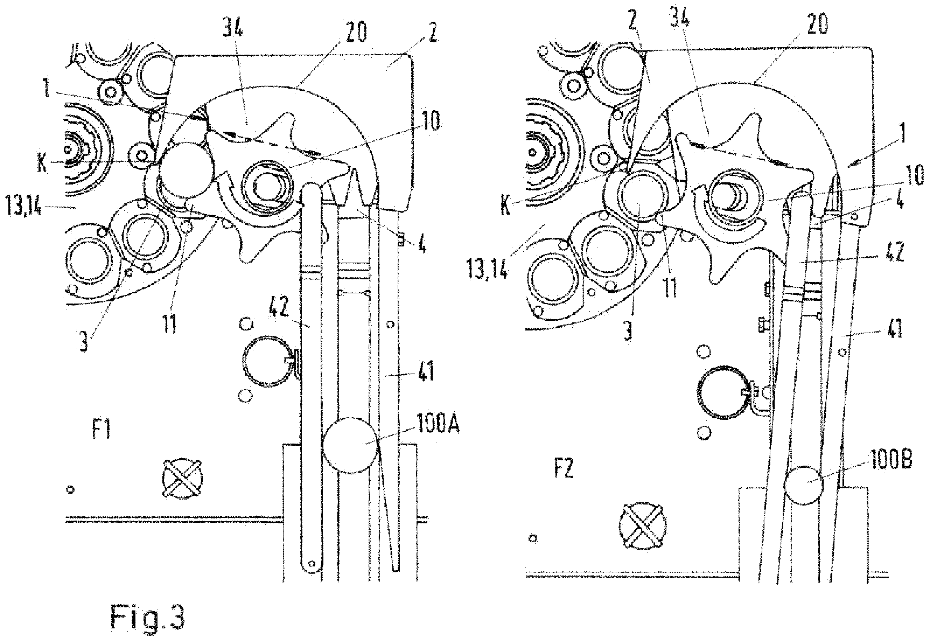

Fig. 3 zeigt eine Draufsicht einer erfindungsgemässen Auslaufvorrichtung 1.

Dabei ist die Verarbeitungsstation 14 mit einem Behälterförderer 13 als Dosenverschliesser 14 ausgestaltet. Der Behälterförderer 13 bewegt die Dosen 100 durch den Dosenverschliesser 14.

Die Auslaufvorrichtung 1 zum Abführen der Dosen 100 aus dem Dosenverschliesser 14 umfasst einen Auslaufstern 10 mit einer Vielzahl von Mitnehmern 11 zum Transportieren einer Vielzahl von Dosen 100. Zwischen zwei Mitnehmern 11 wird dabei eine Dosenaufnahme definiert.

Ausserdem umfasst die Auslaufvorrichtung 1 ein um den Auslaufstern 10 angeordnetes Auskämmteil 2, welches Auskämmteil 2 eine Auskämmkurve 20 zum Führen der Dosen 100 definiert. An einem ersten Ende des Auskämmteils 2 ist ein Behältereingang 3 zur Aufnahme der Dosen 100 aus dem Dosenverschliesser 14 angeordnet. An einem zweiten Ende des Auskämmteils 2 ist ein Behälterausgang 4 zur Abfuhr der Dosen 100 aus der Auslaufvorrichtung 1 angeordnet.

Das Auskämmteil 2 umfasst dabei an dem ersten Ende (am Behältereingang 3) eine Auskämmkante K. Die Auskämmkante K ist derart in einem Bereich des Behälterförderers 13 angeordnet, dass Dosen 100 im Betriebszustand durch die Auskämmkante K aus dem Dosenverschliesser 14 in den Behältereingang 3 aufgenommen werden.

Der Auslaufstern 10 ist derart um eine Achse rotierbar angeordnet, dass die Dosen 100 durch die Mitnehmer 11 auf einer durch die Auskämmkurve 20 und den Auslaufstern 10 begrenzten Führungsbahn 34 vom Behältereingang 3 zum Behälterausgang 4 transportiert werden können.

Das Auskämmteil 2 ist in einer zu der Achse, um welche der Auslaufstern 10 im Betriebszustand rotiert, orthogonal verlaufenden, radialen Richtung derart verschiebbar angeordnet, dass die Auskämmkante K relativ zum Behälterförderer 13 bewegbar ist.

So kann die Auskämmkante K also weiter zu dem Bereich des Behälterförderers 13 oder von dem Bereich des Behälterförderers 13 wegbewegt werden.

Dadurch wird es ermöglicht, dass verschiedene Arten von Dosen 100 mit verschiedenen Grössen, insbesondere verschiedenen Radien aufgenommen werden können, ohne dass das Auskämmteil 2 ausgetauscht werden muss. In Fig. 3 sind dabei zwei verschiedene Dosenformate: Dose 100 mit Format 100A und Dose 100 mit Format 100B; gezeigt, wobei die Auslaufvorrichtung für Dosenformat 100A in Konfiguration F1 und für Dosenformat 100B in Konfiguration F2 gebracht wird.

Dabei sind der Auslaufstern 10 (auch Sternrad) und das Auskämmteil 2 in der radialen Richtung synchron verschiebbar.

Für ein kleineres Dosenformat (bei einem Wechsel zu einem kleineren Dosenformat) wie 100B wird die Auskämmkante K vom Behälterförderer 13 wegbewegt, dadurch kann eine kleinere Dose 100B (von der Auslaufvorrichtung 1) aufgenommen und abgeführt werden. Dafür werden Auslaufstern 10 und Auskämmteil 2 entlang des gestrichelten Doppelpfeiles verschoben (nach rechts mit Blick auf Fig. 3).

Für ein grösseres Dosenformat (bei einem Wechsel zu einem grösseren Dosenformat) wie 100A wird die Auskämmkante K zu dem Behälterförderer 13 bewegt, dadurch kann eine grössere Dose 100A (von der Auslaufvorrichtung 1) aufgenommen und abgeführt werden. Dafür werden Auslaufstern 10 und Auskämmteil 2 entlang des gestrichelten Doppelpfeiles verschoben (nach links mit Blick auf Fig. 3).

Der Auslaufstern 10 und das Auskämmteil 2 sind für die synchrone Verschiebung bevorzugt über ein Verbindungsteil gekoppelt.

An dem Behälterausgang 4 sind eine erste und eine zweite Abführschiene 41, 42 angeordnet. Durch diese Abführschienen 41, 42 wird ein Kippen der Dosen 100 nach Verlassen der begrenzten Führungsbahn 34 (also hinter der Auskämmkurve 20) verhindert.

Die erste Abführschiene 41 ist an dem zweiten Ende des Auskämmteils 2 befestigt. Somit wird die erste Abführschiene 41 beim Verschieben des Auskämmteils 2 auch verschoben. So wird auch die Abführschiene 41 an eine neue Ausrichtung des Auskämmteils 2 bei dem Formatwechsel (Wechsel von 100A zu 100B) angepasst.

Die zweite Abführschiene 42 ist gegenüberliegend zur ersten Abführschiene 41 angeordnet. Die zweite Abführschiene 42 ist derart verschiebbar in die radiale Richtung angeordnet, dass die zweite Abführschiene 42 relativ zum Behälterförderer bewegbar ist. Dabei ist die zweite Abführschiene 42 unabhängig von der ersten Abführschiene 41 bewegbar, durch eine nicht dargestellte separate Verschiebungseinheit.

Durch die zweite Abführschiene 42 in Kombination mit der ersten Abführschiene 41 wird eine Abführbahn definiert, welche durch die Verschiebung der zweiten Abführschiene 42 in ihrer Breite variiert werden kann, wodurch eine Anpassung der Abführbahn auf verschiedene Dosenformate ermöglicht wird.

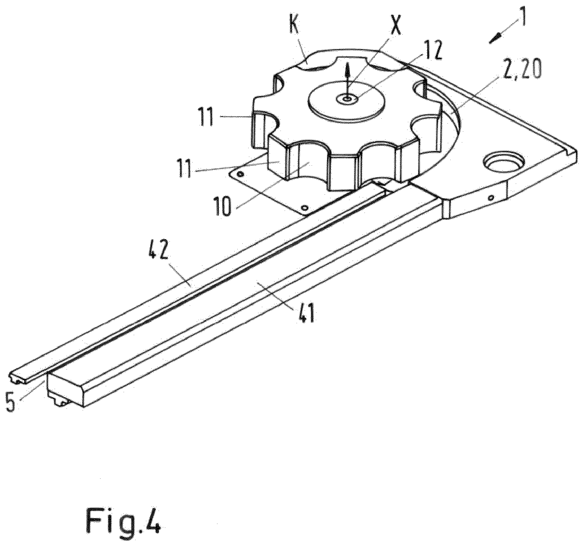

Fig. 4 zeigt eine perspektivische Darstellung der erfindungsgemässen Auslaufvorrichtung 1 gemäss Fig. 3.

Der Auslaufstern 10 ist über seine Sternwelle 12 mit der Antriebswelle gekoppelt, sodass der Auslaufstern 10 im Betriebszustand um die Achse X derart rotiert werden kann, dass die Dosen durch die Mitnehmer 11 transportiert werden können.

Die Abführschienen 41 und 42 sind einander gegenüberliegend angeordnet. Durch die zweite Abführschiene 42 in Kombination mit der ersten Abführschiene 41 wird so die Abführbahn 5 gebildet, welche durch die Verschiebung der zweiten Abführschiene 42 in ihrer Breite variiert werden kann. Die Abführbahn 5 kann prinzipiell ein Abführband umfassen, auf welchem die Dosen geführt werden können.

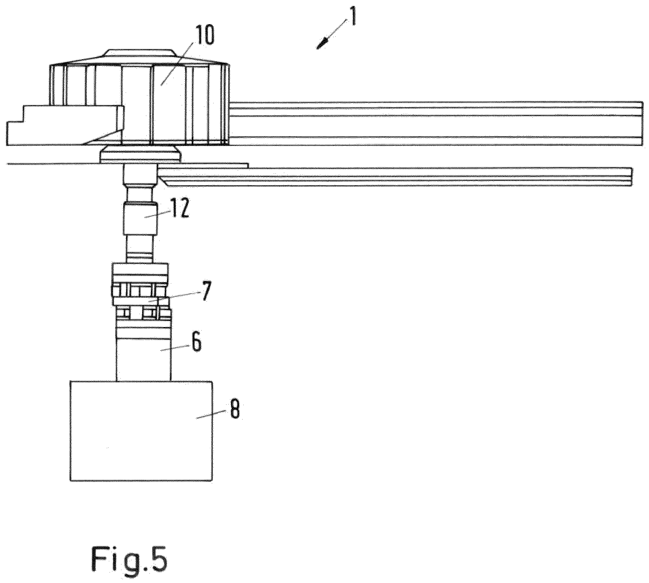

Fig. 5 zeigt eine weitere schematische Darstellung der erfindungsgemässen Auslaufvorrichtung 1.

Die gezeigte Auslaufvorrichtung 1 umfasst den Antrieb 8 zum Rotieren des Auslaufsterns 10. Der Auslaufstern 10 ist über die Sternwelle 12 mit dem Antrieb 8 verbunden. Um die Bewegung / Verschiebung des Auslaufsterns zu erleichtern, ist die Sternwelle 12 über eine Schmidt-Kupplung 7 mit der Antriebswelle 6 und so mit dem Antrieb 8 verbunden, sodass der Auslaufstern 10 relativ zum Antrieb 8 in der radialen Richtung bewegbar ist, ohne dass der Antrieb 8 mit bewegt werden muss.

## Patentansprüche

1. Auslaufvorrichtung für eine Vorrichtung (1000) umfassend einen Auslaufstern (10) mit einem Mitnehmer (11) zum Transportieren von Behältern (100);
ein um den Auslaufstern (10) angeordnetes Auskämmteil (2), welches Auskämmteil (2) eine Auskämmkurve (20) zum Führen der Behälter (100) definiert;
einen an einem ersten Ende des Auskämmteils (2) angeordneten Behältereingang (3) zur Aufnahme der Behälter (100); sowie einen an einem zweiten Ende des Auskämmteils (2) angeordneten Behälterausgang (4) zur Abfuhr der Behälter (100) aus der Auslaufvorrichtung (1); wobei das Auskämmteil (2) an dem ersten Ende eine Auskämmkante (K) umfasst, und der Auslaufstern (10) derart um eine Achse (X) rotierbar angeordnet ist, dass der Behälter (100) durch den Mitnehmer (11) des Auslaufsterns (10) auf einer durch die Auskämmkurve (20) und den Auslaufstern (10) begrenzten Führungsbahn (34) vom Behältereingang (3) zum Behälterausgang (4) transportierbar ist,
wobei das Auskämmteil (2) in einer zu der Achse (X) orthogonal verlaufenden radialen Richtung verschiebbar angeordnet ist, sodass die Auslaufvorrichtung (1) verschiedene Behälterformate aufnehmen kann,
**dadurch gekennzeichnet, dass**
der Auslaufstern (10) mit dem Auskämmteil (2) in der radialen Richtung verschiebbar angeordnet ist.

2. Vorrichtung zur Verarbeitung von Behältern (100) umfassend eine Verarbeitungsstation (14) mit einem Behälterförderer (13) zum Bewegen des Behälters (100) durch die Verarbeitungsstation (14) und eine Auslaufvorrichtung (1) nach Anspruch 1 zum Abführen des Behälters (100) aus der Verarbeitungsstation (14);
wobei die Auskämmkante (K) derart in einem Bereich des Behälterförderers (13) angeordnet ist, dass der Behälter (100) im Betriebszustand durch die Auskämmkante (K) aus der Verarbeitungsstation (14) in den Behältereingang (3) aufnehmbar ist, und das Auskämmteil (2) in der zu der Achse (X) orthogonal verlaufenden radialen Richtung derart verschiebbar angeordnet ist, dass die Auskämmkante (K) relativ zum Behälterförderer (13) bewegbar ist, sodass die Auslaufvorrichtung (1) die verschiedenen Behälterformate aufnehmen kann.

3. Vorrichtung nach Anspruch 2, wobei der Auslaufstern (10) eine Vielzahl von Mitnehmern (11) zum Transportieren einer Vielzahl von Behältern (100) umfasst.

4. Vorrichtung nach einem der Ansprüche 2 oder 3, wobei die Auslaufvorrichtung (1) eine an dem Behälterausgang (4) angeordnete Abführschiene (41, 42) zum Führen der Behälter (100) umfasst.

5. Vorrichtung nach Anspruch 4, wobei die Abführschiene (41, 42) eine erste an dem zweiten Ende des Auskämmteils (2) befestigte Abführschiene (41) umfasst.

6. Vorrichtung nach Anspruch 5, wobei die Abführschiene (41, 42) eine der ersten Abführschiene (41) gegenüber angeordnete zweite Abführschiene (42) umfasst, welche zweite Abführschiene (42) derart verschiebbar in die radiale Richtung angeordnet ist, dass die zweite Abführschiene (42) relativ zum Behälterförderer (13) bewegbar ist.

7. Vorrichtung nach einem der Ansprüche 2 bis 6, wobei die Auslaufvorrichtung (1) ein an dem Behälterausgang (4) angeordnetes Abführband zum Wegführen der Behälter (100) von der Auslaufvorrichtung (1) umfasst.

8. Vorrichtung nach einem der Ansprüche 2 bis 7, wobei die Auslaufvorrichtung (1) einen Antrieb (8) zum Rotieren des Auslaufsterns (10) umfasst, wobei der Auslaufstern (10) über eine Sternwelle (12) mit dem Antrieb (8) verbunden ist.

9. Vorrichtung nach Anspruch 8, wobei die Sternwelle (12) über eine Parallelkurbelkupplung (7) mit dem Antrieb (8) verbunden ist, sodass der Auslaufstern (10) relativ zum Antrieb (8) in der radialen Richtung bewegbar ist.

10. Vorrichtung nach Anspruch 9, wobei die Parallelkurbelkupplung (7) als eine Schmidt-Kupplung (7) ausgestaltet ist.

11. Vorrichtung nach einem der Ansprüche 2 bis 10, wobei die Verarbeitungsstation (14) als ein Verschliesser (14), insbesondere als ein Dosenverschliesser (14) ausgestaltet ist.

12. Verfahren zum Anpassen der Vorrichtung (1000) nach einem der Ansprüche 2 bis 11 an ein Behälterformat (100A, 100B) des Behälters (100) umfassend
c) Bereitstellen einer Vorrichtung (1000) nach einem der Ansprüche 2 bis 11;
d) Verschieben des Auskämmteils (2) in der zu der Achse (X) orthogonal verlaufenden radialen Richtung, sodass die Auskämmkante (K) relativ zum Behälterförderer (13) bewegt wird.

## Claims

1. A discharge apparatus for an apparatus (1000) comprising a discharge star (10) with a carrier (11) for transporting containers (100);
a discharge device (2) arranged around the discharge star (10), which discharge device (2) defines a discharge curve (20) for guiding the containers (100);
a container inlet (3) arranged at a first end of the discharge device (2) for receiving the containers (100); and
a container outlet (4) arranged at a second end of the discharge device (2) for discharging the containers (100) from the discharge apparatus (1);
wherein the discharge device (2) comprises a discharge edge (K) at the first end, and the discharge star (10) is arranged to be rotatable about an axis (X) in such a way that the container (100) can be transported by the carrier (11) of the discharge star (10) on a guideway (34) delimited by the discharge curve (20) and the discharge star (10) from the container inlet (3) to the container outlet (4),
wherein the discharge device (2) is arranged to be displaceable in a radial direction extending orthogonal to the axis (X) such that the discharge apparatus (1) can receive various container formats,
**characterized in that**
the discharge star (10) with the discharge device (2) is arranged to be displaceable in the radial direction.

2. An apparatus for processing containers (100) comprising a processing station (14) with a container conveyor (13) for moving the container (100) through the processing station (14) and a discharge apparatus (1) according to claim 1 for discharging the container (100) from the processing station (14);
wherein the discharge edge (K) is arranged in a region of the container conveyor (13) in such a way that, in the operating state, the container (100) can be received by the discharge edge (K) from the processing station (14) into the container inlet (3), and the discharge device (2) is arranged to be displaceable in the radial direction extending orthogonal to the axis (X) in such a way that the discharge edge (K) can be moved relative to the container conveyor (13) such that the discharge apparatus (1) can receive the various container formats.

3. An apparatus according to claim 2, wherein the discharge star (10) comprises a plurality of carriers (11) for transporting a plurality of containers (100).

4. An apparatus according to anyone of the claims 2 or 3, wherein the discharge apparatus (1) comprises a discharge rail (41, 42) arranged at the container outlet (4) for guiding the containers (100).

5. An apparatus according to claim 4, wherein the discharge rail (41, 42) comprises a first discharge rail (41) attached to the second end of the discharge device (2).

6. An apparatus according to claim 5, wherein the discharge rail (41, 42) comprises a second discharge rail (42) arranged opposite the first discharge rail (41), which second discharge rail (42) is arranged to be displaceable in the radial direction in such a way that the second discharge rail (42) can be moved relative to the container conveyor (13).

7. An apparatus according to anyone of the claims 2 to 6, wherein the discharge apparatus (1) comprises a discharge belt arranged at the container outlet (4) for guiding the containers (100) away from the discharge apparatus (1).

8. An apparatus according to anyone of the claims 2 to 7, wherein the discharge apparatus (1) comprises a drive (8) for rotating the discharge star (10), the discharge star (10) being connected to the drive (8) via a star shaft (12).

9. An apparatus according to claim 8, wherein the star shaft (12) is connected to the drive (8) via a parallel crank coupling (7) so that the discharge star (10) can be moved in the radial direction relative to the drive (8).

10. An apparatus according to claim 9, wherein the parallel crank coupling (7) is designed as a Schmidt coupling (7).

11. An apparatus according to anyone of the claims 2 to 10, wherein the processing station (14) is designed as a sealer (14), in particular as a can sealer (14).

12. A method for adapting the apparatus (1000) according to anyone of the claims 2 to 11 to a container format (100A, 100B) of the container (100), comprising
c) Providing an apparatus (1000) according to anyone of the claims 2 to 11;
d) Displacing the discharge device (2) in the radial direction extending orthogonal to the axis (X) so that the discharge edge (K) is moved relative to the container conveyor (13).

## Revendications

1. Dispositif de déchargement pour un dispositif (1000) comprenant une étoile de déchargement (10) avec un support (11) pour le transport de récipients (100) ;
un élément de déchargement (2) disposé autour de l'étoile de déchargement (10), lequel élément de déchargement (2) définit une courbe de déchargement (20) pour le guidage des récipients (100) ;
une entrée de récipient (3) disposée à une première extrémité d'élément de déchargement (2) pour recevoir les récipients (100) ; et
une sortie de récipient (4) disposée à une deuxième extrémité d'élément de déchargement (2) pour décharger les récipients (100) du dispositif de déchargement (1) ;
dans lequel l'élément de déchargement (2) comprend un bord de déchargement (K) à la première extrémité, et l'étoile de déchargement (10) est disposée de manière à pouvoir tourner autour d'un axe (X) de telle sorte que le récipient (100) peut être transporté par le support (11) de l'étoile de déchargement (10) sur une voie de guidage (34) délimitée par la courbe de déchargement (20) et l'étoile de déchargement (10) depuis l'entrée de récipient (3) jusqu'à la sortie de récipient (4),
dans lequel l'élément de déchargement (2) est disposé de manière à pouvoir être déplacé dans une direction radiale s'étendant orthogonalement à l'axe (X) de telle sorte que le dispositif de déchargement (1) peut recevoir différentes tailles de récipient,
**caractérisé en ce que**
l'étoile de déchargement (10) avec l'élément de déchargement (2) est disposée de manière à pouvoir être déplacée dans la direction radiale.

2. Dispositif de traitement de récipients (100) comprenant une station de traitement (14) avec un transporteur de récipient (13) pour déplacer le récipient (100) à travers la station de traitement (14) et un dispositif de déchargement (1) selon la revendication 1 pour décharger le récipient (100) de la station de traitement (14) ;
dans lequel le bord de déchargement (K) est disposé dans une région du transporteur de récipient (13) de telle sorte que, dans l'état de fonctionnement, le récipient (100) peut être reçu par le bord de déchargement (K) depuis la station de traitement (14) dans l'entrée de récipient (3), et l'élément de déchargement (2) est disposé de manière à pouvoir être déplacé dans la direction radiale s'étendant orthogonalement à l'axe (X) de telle sorte que le bord de déchargement (K) peut être déplacé par rapport au transporteur de récipient (13) de telle sorte que le dispositif de déchargement (1) peut recevoir les différentes tailles de récipient,

3. Dispositif selon la revendication 2, dans lequel l'étoile de déchargement (10) comprend une pluralité de supports (11) pour le transport d'une pluralité de récipients (100).

4. Dispositif selon l'une quelconque des revendications 2 ou 3, dans lequel le dispositif de déchargement (1) comprend un rail de déchargement (41, 42) disposé à la sortie de récipient (4) pour le guidage des récipients (100).

5. Dispositif selon la revendication 4, dans lequel le rail de déchargement (41, 42) comprend un premier rail de déchargement (41) fixé à la deuxième extrémité d'élément de déchargement (2).

6. Dispositif selon la revendication 5, dans lequel le rail de déchargement (41, 42) comprend un deuxième rail de déchargement (42) disposé à l'opposé du premier rail de déchargement (41), lequel deuxième rail de déchargement (42) est disposé de manière à pouvoir être déplacé dans la direction radiale de telle sorte que le deuxième rail de déchargement (42) peut être déplacé par rapport au transporteur de récipient (13).

7. Dispositif selon l'une quelconque des revendications 2 à 6, dans lequel le dispositif de déchargement (1) comprend une bande de déchargement disposée à la sortie de récipient (4) pour l'éloignement des récipients (100) du dispositif de déchargement (1).

8. Dispositif selon l'une quelconque des revendications 2 à 7, dans lequel le dispositif de déchargement (1) comprend un entraînement (8) pour la rotation de l'étoile de déchargement (10), l'étoile de déchargement (10) étant reliée à l'entraînement (8) par le biais d'un arbre d'étoile (12).

9. Dispositif selon la revendication 8, dans lequel l'arbre d'étoile (12) est relié à l'entraînement (8) par le biais d'un accouplement à manivelle parallèle (7) de telle sorte que l'étoile de déchargement (10) peut être déplacée dans la direction radiale par rapport à l'entraînement (8).

10. Dispositif selon la revendication 9, dans lequel l'accouplement à manivelle parallèle (7) est réalisé sous forme d'accouplement de Schmidt (7).

11. Dispositif selon l'une quelconque des revendications 2 à 10, dans lequel la station de traitement (14) est réalisée sous forme de scelleuse (14), en particulier sous forme de scelleuse de boîte (14).

12. Procédé pour l'adaptation du dispositif (1000) selon l'une quelconque des revendications 2 à 11 à un format de récipient (100A, 100B) du récipient (100), comprenant
c) la mise à disposition d'un dispositif (1000) selon l'une quelconque des revendications 2 à 11.
d) le déplacement d'élément de déchargement (2) dans la direction radiale s'étendant orthogonalement à l'axe (X) de telle sorte que le bord de déchargement (K) est déplacé par rapport au transporteur de récipient (13).
